# EUROPÄISCHE PATENTSCHRIFT

(11) **EP 4 051 483 B1**
(45) Veröffentlichungstag und Bekanntmachung des Hinweises auf die Patenterteilung: **30.10.2024**
(21) Anmeldenummer: 20786481.0
(22) Anmeldetag: 25.09.2020
(51) Int. Cl.: B29C 49/54, B29C 49/04, B29C 49/22, B29K 23/00, B29K 105/26, B29C 65/02, B29C 49/42, B29C 49/48, B29L 31/00, B65D 77/04, B65D 77/06

(54) **KUNSTSTOFFBEHÄLTER FÜR FLÜSSIGKEITEN SOWIE VERFAHREN ZUR HERSTELLUNG EINES KUNSTSTOFFBEHÄLTERS**
PLASTIC CONTAINER FOR FLUIDS AND METHOD FOR PRODUCING A PLASTIC CONTAINER
CONTENANT EN MATIÈRE PLASTIQUE POUR FLUIDES ET PROCÉDÉ DE PRODUCTION D'UN CONTENANT EN MATIÈRE PLASTIQUE

(30) Priorität: 31.10.2019 DE 102019129504
(43) Veröffentlichungstag der Anmeldung: 07.09.2022
(73) Patentinhaber: Protechna S.A., 1701 Fribourg (CH)
(72) Erfinder: BLÖMER, Peter, 53773 Hennef (DE); MOSEN, Johannes, 56269 Dierdorf (DE); ERLL, Carsten, 56244 Helferskirchen (DE); ERLL, Thomas, 56244 Helferskirchen (DE)
(74) Vertreter: advotec.
(86) Internationale Anmeldenummer: PCT/EP2020/076942
(87) Internationale Veröffentlichungsnummer: WO 2021/083591

(56) Entgegenhaltungen:
- EP-B1- 2 387 492
- WO-A1-2019/057265
- DE-A1- 2 906 974
- DE-U1- 202006 020 793
- US-A- 3 042 271

## Beschreibung

Die vorliegende Erfindung betrifft einen Kunststoffbehälter für Flüssigkeiten, insbesondere im Behälter für Transport- und Lagerbehälter für Flüssigkeiten mit einem Außenmantel aus einem Gitterwerk oder Blechmaterial und einem palettenartigen Untergestell, wobei der Kunststoffbehälter als Blasformkörper durch Blasformen aus einem schlauchförmigen Vorformling in einer Blasform ausgebildet ist und in einem Armaturenanschlussbereich einer Behälterwand einen mit einer Behälteröffnung versehenen Behälterstutzen zum Anschluss einer Behälterarmatur aufweist, der über eine Schweißverbindung mit einem Anschlussflansch der Behälterarmatur verbunden ist, wobei die Behälterwand eine aus einem ersten Kunststoffmaterial gebildete Innenschicht und eine aus einem zweiten Kunststoffmaterial gebildete Außenschicht aufweist.

Aus der EP 1 630 105 A1 ist ein Kunststoffbehälter der eingangs genannten Art bekannt, der eine über eine Heizelement-Stumpfschweißverbindung an einem Behälterstutzen angeschlossene Behälterarmatur aufweist. Der bekannte Kunststoffbehälter wird im Blasformverfahren hergestellt, wobei zur Ausbildung eines Behälterstutzens, der zum Anschluss der Behälterarmatur dient, gleichzeitig mit der Herstellung des Blasformkörpers an einem Armaturenanschlussbereich der Behälterwand eine Ausstülpung ausgebildet wird, von der mit Hilfe eines Schneidwerkzeugs zur Ausbildung einer Behälteröffnung ein Wandbereich entfernt wird, um den Behälterstutzen auszubilden. Nach dem Einsatz des Schneidwerkzeugs weist der Behälterstutzen somit eine Behälteröffnung mit einem Außenrand auf, der in einer Ebene parallel zur Behälterwand eine Schweißkontaktfläche ausbildet. Beim nachfolgenden Spiegelschweiß- oder Stumpfschweißverfahren wird ein Heizspiegel als Heizelement zwischen dem Behälterstutzen und einem gegenüberliegend angeordneten Anschlussstutzen der Behälterarmatur angeordnet, um sowohl eine am Behälterstutzen ausgebildete Schweißkontaktfläche als auch eine am Anschlussstutzen der Behälterarmatur ausgebildete Schweißkontaktfläche auf Schweißtemperatur aufzuwärmen, so dass nach Entfernung des Heizspiegels die Schweißkontaktflächen unter Druck gegeneinander gepresst werden und zur Ausbildung der Schweißverbindung in dieser Position abkühlen können.

Das vorstehend beschriebene Verfahren zur Herstellung einer Schweißverbindung zwischen dem Behälterstutzen des Kunststoffbehälters und dem Anschlussstutzen der Behälterarmatur wird insbesondere auch bei Kunststoffbehältern eingesetzt, deren Behälterwand einen mehrschichtigen Aufbau aufweist, wobei, etwa getrennt durch eine EVOH-Barriereschicht, eine aus Polyethylen gebildete Innenschicht mit einer aus einem Regenerat gebildeten Außenschicht kombiniert sind. Sowohl die EVOH-Schicht als auch die Regeneratschicht, welche aus einem Recyclematerial gebildet ist, weisen keine Schweißeignung zur Verbindung mit einer regelmäßig aus Polyethylen gebildeten Behälterarmatur auf, so dass im Bereich des Außenrands des Behältersstutzens zunächst die Außenschicht und die EVOH-Schicht entfernt werden müssen, um eine Schweißverbindung zwischen dem Behälterstutzen und der Behälterarmatur herstellen zu können.

Die EP 2 387 492 B1 offenbart einen Kunststoffbehälter für einen Kraftstoff, wobei der Kunststoffbehälter als Blasformkörper durch Blasformen aus einem schlauchförmigen Vorformling in einer Blasform ausgebildet ist und in einem Armaturenanschlussbereich einer Behälterwand einen mit einer Behälteröffnung versehenen Behälterstutzen zum Anschluss einer Behälterarmatur aufweist, der über eine Schweißverbindung mit einem Anschlussflansch der Behälterarmatur verbunden ist, wobei die Behälterwand eine aus einem ersten Kunststoffmaterial gebildete Innenschicht und eine aus einem zweiten Kunststoffmaterial gebildete Außenschicht aufweist. Dabei dient der Behälterstutzen bzw. die Behälterarmatur einem Einfüllen von Kraftstoff in den Kunststoffbehälter. Eine Entnahme von Kraftstoff bzw. eine Versorgung eines Motors mit dem Kraftstoff erfolgt über eine Leitung an einer Oberseite des Kunststoffbehälters mittels einer in einem Innenraum des Kunststoffbehälters angeordneten Pumpe. Die Pumpe ist weiter über eine Leitung mit der Behälterarmatur verbunden.

Der vorliegenden Erfindung liegt daher die Aufgabe zugrunde, einen Kunststoffbehälter sowie ein Verfahren zur Herstellung eines Kunststoffbehälters vorzuschlagen, der einen mehrschichtigen Wandaufbau aufweist und auf einfache Art und Weise mittels einer Schweißverbindung mit einer Behälterarmatur versehen werden kann, wobei die Behälterarmatur als Entnahmearmatur ausgebildet ist.

Zur Lösung dieser Aufgabe weist der erfindungsgemäße Kunststoffbehälter die Merkmale des Anspruchs 1 auf.

Erfindungsgemäß weist die Behälterwand eine aus einem ersten Kunststoffmaterial gebildete Innenschicht und eine aus einem zweiten Kunststoffmaterial gebildete Außenschicht und der Behälterstutzen einen sich zur Behälteröffnung hin erweiternden Längsquerschnitt auf, derart, dass eine Stirnfläche des Behälterstutzens zumindest teilweise durch ein gegenüberliegend der Außenschicht angeordnetes Innenschichtsegment gebildet ist, und eine Schweißkontaktfläche des Behälterstutzens von dem Innenschichtsegment ausgebildet wird, wobei der Behälterstutzen konusförmig ausgebildet ist, derart, dass die Schweißkontaktfläche durch eine Mantelfläche eines mit der Innenschicht versehenen Innenkonus gebildet ist, der mit einen am Anschlussstutzen der Behälterarmatur ausgebildeten Außenkonus verschweißt ist, wobei die Behälterarmatur als Entnahmearmatur ausgebildet ist.

Der Begriff "Stirnfläche" ist in diesem Zusammenhang als die Flächenprojektion des Behälterstutzens in eine Frontebene des Kunststoffbehälters, also eine zu der den Behälterstutzen aufweisenden Behälterwand parallelen Ebene zu verstehen, derart, dass das Innenschichtsegment eine Flächenprojektion in die Stirnfläche ausbildet und somit die Schweißkontaktfläche des Behälterstutzens bei der Herstellung eines Schweißkontakts zwischen dem Anschlussstutzen der Behälterarmatur und dem Behälterstutzen ausbildet. Dadurch, dass die Relativanordnung der Au-βenschicht zum Innenschichtsegment so bestimmt ist, dass die Außenschicht gegenüberliegend dem Innenschichtsegment, also vom Innenschichtsegment abgewandt, angeordnet ist, wird verhindert, dass es bei der Durchführung der Schweißung zu einem Schweißkontakt zwischen dem Anschlussstutzen der Behälterarmatur und der Außenschicht der Behälterwandung kommen kann. Vielmehr ist aufgrund der erfindungsgemäßen Ausgestaltung der Schweißkontakt bzw. die Ausbildung einer Schweißkontaktfläche am Behälterstutzen auf das Innenschichtsegment beschränkt. Damit ist sichergestellt, dass es nicht zu einem Schweißkontakt zwischen hinsichtlich einer Schweißverbindung inkompatiblen Materialien, der die Qualität der Schweißverbindung nachteilig beeinflusst, kommen kann.

Erfindungsgemäßist der Behälterstutzen konusförmig ausgebildet, derart, dass die Schweißkontaktfläche durch eine Mantelfläche eines mit der Innenschicht versehenen Innenkonus gebildet ist, der mit einem am Anschlussstutzen der Behälterarmatur ausgebildeten Außenkonus verschweißt ist.

Bei dem erfindungsgemäßen Verfahren erfolgt beim Blasformen des eine Behälterwand mit einer aus einem ersten Kunststoffmaterial gebildeten Innenschicht und einer aus einem zweiten Kunststoffmaterial gebildeten Außenschicht aufweisenden Kunststoffbehälters zur Ausbildung der Ausstülpung eine Expansion der Behälterwand in eine sich erweiternde Wandausnehmung der Blasform, derart, dass die in der Behälterwand ausgebildete Ausstülpung zu einer Deckelwand hin einen größer werdenden Querschnitt aufweist und nach dem Abtrennen der Deckelwand zur Ausbildung der Behälteröffnung eine sich zur Behälteröffnung erstreckende durch ein Innenschichtsegment gebildete Schweißkontaktfläche ausgebildet wird, wobei die Expansion in eine sich konusförmig erweiternde Wandausnehmung erfolgt, wobei die Behälterarmatur als Entnahmearmatur ausgebildet ist. Das nachfolgend ausgeführte Schweißverfahren kann insbesondere als Heizelement-Stumpfschweißverfahren ausgeführt werden. Mögliche weitere vorteilhaft einsetzbare Schweißverfahren sind die bekannten Reibschweißverfahren, wie insbesondere Rotationsschweißen und Vibrationsschweißen.

Ein derartiges Herstellungsverfahren stellt sicher, dass die durch das Innenschichtsegment gebildete Schweißkontaktfläche exponiert in einer Stirnfläche des Behälterstutzens angeordnet ist und somit bei der Herstellung eines Schweißkontakts zwischen dem Anschlussstutzen der Behälterarmatur und dem Behälterstutzen ein Flächenkontakt zwischen dem Innenschichtsegment und dem Anschlussstutzen der Behälterarmatur ausgebildet wird.

Erfindungsgemäß erfolgt die Expansion in eine sich konusförmig erweiternde Wandausnehmung, so dass die vorstehend bereits erörterte konisch ausgebildete Schweißkontaktfläche mit den daraus sich ergebenden vorteilhaften Wirkungen erzielt wird.

Wenn die Ausbildung der Ausstülpung in zumindest zwei Expansionsschritten erfolgt, derart, dass in einem ersten Expansionsschritt eine Ausbildung eines Zentralbereichs der Ausstülpung erfolgt und nachfolgend in einem zweiten Expansionsschritt die Ausbildung eines zum Zentralbereich konzentrisch angeordneten konusförmigen Wandbereichs der Ausstülpung erfolgt, kann die maximal auftretende Dehnung bei der Ausbildung der Ausstülpung im Vergleich zu einer Ausbildung der Ausstülpung in nur einem Expansionsschritt reduziert werden, so dass die sich in Folge der Dehnung ergebende Wanddickenreduktion der Behälterwand entsprechend begrenzt ist. Somit kann insbesondere sichergestellt werden, dass das Innenschichtsegment die zur Ausbildung einer qualitativ hochwertigen Schweißverbindung notwendige Materialstärke aufweist.

Besonders vorteilhaft ist es dabei, wenn der Zentralbereich der Ausstülpung zylindrisch ausgebildet ist, so dass im Bereich des Konus einer gleichmäßigen Wanddickenverteilung erreichbar ist.

Vorzugsweise kann die Ausbildung des Zentralbereichs der Ausstülpung gleichzeitig mit der Ausbildung des Blasformkörpers erfolgen, so dass mit der Ausführung des zweistufigen Expansionsverfahrens keine wesentliche Erhöhung der Blasformzeiten zur Herstellung des Blasformkörpers verbunden sind.

Nachfolgend wird eine bevorzugte Ausführungsform der Erfindung anhand der Zeichnung näher erläutert.

Es zeigen:
- **Fig. 1**: eine perspektivische Darstellung eines als Palettenbehälter ausgebildeten Flüssigkeitsbehälters mit einem als Kunststoffbehälter ausgebildeten Innenbehälter;
- **Fig. 2**: eine vergrößerte Darstellung eines Armaturenanschlussbereichs des Kunststoffbehälters in teilweise geschnitten dargestellter Seitenansicht;
- **Fig. 3a**: eine vergrößerte Detailansicht einer zwischen einem Behälterstutzen und einem Anschlussstutzen der Behälterarmatur ausgebildeten Schweißverbindung;
- **Fig.3b**: eine Stirnansicht des in **Fig. 3a** dargestellten Behälterstutzens;
- **Fig. 4a**: einen ersten Herstellungsschritt zur Herstellung des Behälterstutzens im Blasformverfahren;
- **Fig. 4b**: einen in dem in **Fig. 4a** dargestellten ersten Herstellungsschritt am Kunststoffbehälter erzeugten Zentralbereich einer Ausstülpung zur Ausbildung des Behälterstutzens;
- **Fig. 5a**: einen zweiten Herstellungsschritt zur Herstellung des Behälterstutzens;
- **Fig. 5b**: die mittels des zweiten Herstellungsschritts am Kunststoffbehälter erzeugte Ausstülpung zur Ausbildung des Behälterstutzens;
- **Fig. 5c**: die in **Fig. 5b** dargestellte Ausstülpung in einer Schnittdarstellung;
- **Fig. 6a bis 6c**: eine schematische Darstellung der Verbindung der Behälterarmatur mit dem Behälterstutzen in einem HeizelementStumpfschweißverfahren.

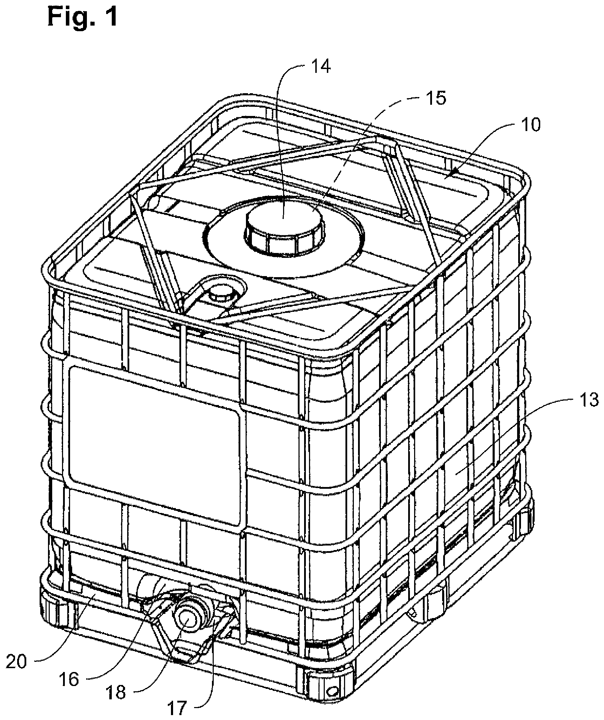

**Fig. 1** zeigt einen als Ein- und Mehrwegbehälter einsetzbaren Transport- und Lagerbehälter, der einen hier quaderförmig ausgebildeten Kunststoffbehälter 10 aufweist, der im vorliegenden Fall einen in einer Behälterwand 13 an einer Oberseite des Kunststoffbehälters 10 ausgebildeten, mit einem Deckel 14 versehenen Einfüllstutzen 15 und in einem Armaturenanschlussbereich 16 der Behälterwand 13 an einer Frontseite des Kunststoffbehälters 10 einen Behälterstutzen 17 zum Anschluss einer Behälterarmatur 18, die im vorliegenden Fall als Entnahmearmatur ausgebildet ist, aufweist.

Der Kunststoffbehälter 10 ist zum Zweck der Ausbildung eines Transport- und Lagerbehälters auf einem palettenartigen Untergestell 19 angeordnet, das zur Abstützung des Kunststoffbehälters 10 einen im vorliegenden Fall als flache Bodenwanne ausgebildeten Stützboden 20 aufweist.

Der Kunststoffbehälter 10 wird durch Blasformen aus einem schlauchförmigen Vorformling hergestellt, wobei der Behälterstutzen 17 zusammen mit dem quaderförmigen Grundkörper des Kunststoffbehälters 10 im Blasformverfahren hergestellt wird.

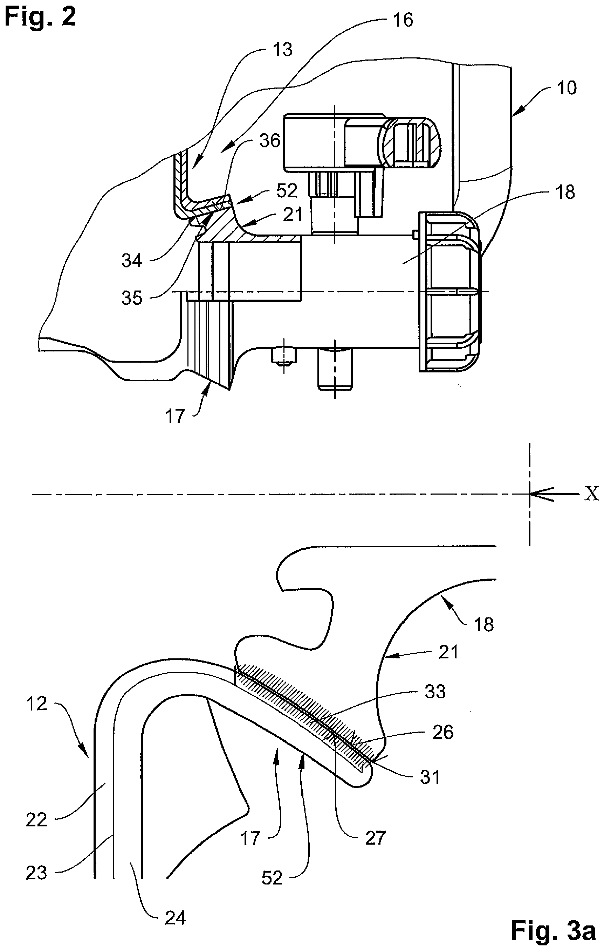

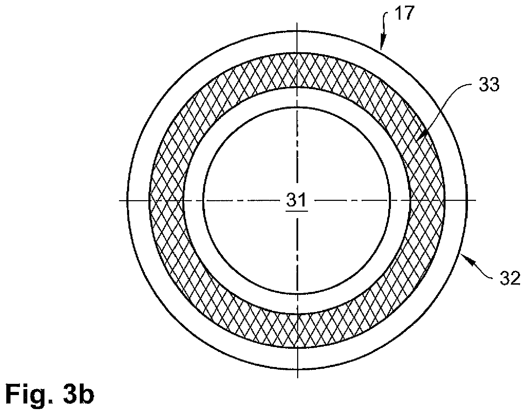

**Fig. 2** zeigt eine nach Herstellung des Kunststoffbehälters 10 im Blasformverfahren durchgeführte Schweißverbindung 52 zwischen dem Behälterstutzen 17 und einem Anschlussstutzen 21 der Behälterarmatur 18. Wie **Fig. 2** zu entnehmen ist, und auch insbesondere in der vergrößerten Darstellung in **Fig. 3** gezeigt ist, weist die Behälterwand 13 des Kunststoffbehälters 10 einen mehrschichtigen Wandaufbau auf, wobei im vorliegenden Fall eine Innenschicht 22, die aus HDPE besteht, durch eine im vorliegenden Fall aus EVOH gebildete Barriereschicht 23 von einer Außenschicht 24 getrennt ist. Da an die Innenschicht 22 wegen des unmittelbaren Kontakts zu der im Kunststoffbehälter 10 aufgenommenen Flüssigkeit, insbesondere im Fall eines Lebensmittelkontakts, erhöhte Anforderungen an die Materialqualität gestellt werden, wird die Innenschicht regelmäßig aus einem homogenen Material definierter Zusammensetzung, wie beispielsweise HDPE, hergestellt. Im Gegensatz hierzu wird als Material für die Außenschicht 24 regelmäßig recyceltes, sogenanntes Regeneratmaterial verwendet, das durch Schreddern und Mahlen des Kunststoffmaterials verbrauchter Kunststoffbehälter hergestellt wird. Darüber hinaus weist der im vorliegenden Fall als explosionsgeschützter Behälter ausgeführte Kunststoffbehälter 10 als äußere Oberfläche eine von einem elektrisch leitfähigen Material gebildete Ex-Schicht 25 auf.

Mit dem Begriff Außenschicht wird hier eine Schicht bezeichnet, die im Gegensatz zur Innenschicht zur Außenseite des Kunststoffbehälters hin angeordnet ist, wobei die Außenschicht nicht unbedingt die äußerste Schicht des Kunststoffbehälters ausbilden muss, sondern mit einer weiteren zur Außenseite des Kunststoffbehälters hin angeordneten Schicht, wie die vorstehend beispielhaft genannte Ex-Schicht oder eine andere Funktionsschicht oder eine Dekorschicht, versehen sein kann. Vorzugsweise besteht die Innenschicht aus erstmalig verwendetem Material und die Außenschicht aus einem aus Mahlgut gebildeten Material, wobei das Mahlgut aus bei der Herstellung von Blasformkörpern entstandenen Produktionsabfällen oder auch von recycelten Kunststoffbehältern stammen kann.

Abweichend von dem erläuterten Ausführungsbeispiel können die Innenschicht und die Außenschicht auch unmittelbar aufeinander angeordnet sein. Im Falle einer zwischenliegenden Funktionsschicht, wie die vorstehend beispielhaft genannte Barriereschicht, können zwischen der Funktionsschicht und den benachbarten Schichten noch Haftvermittler vorgesehen sein.

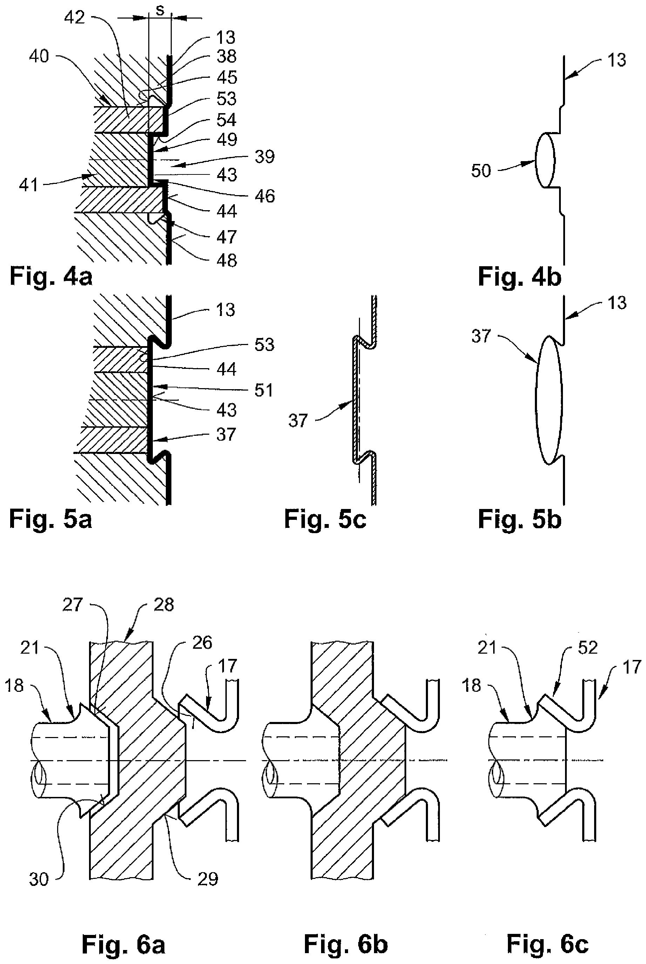

Wie in den **Fig. 6a** bis **6c** dargestellt ist, erfolgt die Ausführung einer in den **Fig. 2** und **3** dargestellten Heizelement-Stumpfschweißverbindung 52 zwischen dem Behälterstutzen 17 und dem Anschlussstutzen 21 der Behälterarmatur 18 derart, dass zunächst miteinander zu verschweißende Schweißkontaktflächen 26, 27 am Behälterstutzen 17 und dem Anschlussstutzen 21 bis zum Erreichen einer teigigen Konsistenz mittels eines zwischen den einander gegenüberliegend angeordneten Schweißkontaktflächen 26, 27 angeordneten Schweißspiegels 28 aufgeheizt werden. Hierzu werden die Schweißkontaktflächen 26, 27 gegen Heizoberflächen 29, 30 des Schweißspiegels 28 verfahren und durch Wärmeleitung aufgeheizt, wie in **Fig. 6b** dargestellt. Nach Erreichen der erforderlichen Schweißtemperatur in den Schweißkontaktflächen 26, 27 bzw. einem entsprechenden Aufschmelzen des Behälterstutzens 17 und des Anschlussstutzens 21 im Bereich der Schweißkontaktflächen 26, 27 wird der Schweißspiegel 28 aus seiner in **Fig. 6b** dargestellten Zwischenposition entfernt und die Schweißkontaktflächen 26, 27 werden, wie in **Fig. 6c** dargestellt, unter Druck gegeneinander verfahren, so dass sich beim nachfolgenden Abkühlen die Schweißverbindung 52 ausbilden kann.

Da die Herstellung einer Schweißverbindung eine entsprechende Materialkompatibilität im Bereich der Schweißkontaktflächen 26, 27 voraussetzt, ist es nicht möglich, eine Behälterarmatur 18, die aus einem PE-Material besteht, mit einer aus einem EVOH-Material gebildeten Barriereschicht 23 oder einer nicht materialkompatiblen, elektrisch leitenden Ex-Schicht 25 der Behälterwand 13 zu verschweißen.

Um zu gewährleisten, dass die in den **Fig. 6a** bis **6c** beispielhaft als Heizelement-Stumpfschweißverbindung dargestellte Schweißverbindung zwischen der außer der Innenschicht 22 noch die Barriereschicht 23, die Außenschicht 24 und die Ex-Schicht 25 aufweisenden Behälterwand 13 und dem Anschlussstutzen 21 erfolgen kann, weist, wie insbesondere in den **Fig. 2 und 3a** dargestellt ist, der Behälterstutzen 17 einen sich zu einer am Behälterstutzen 17 ausgebildeten Behälteröffnung 31 hin erweiternden Längsquerschnitt auf, wie in **Fig. 3a** dargestellt, so dass eine in **Fig. 3b** dargestellte Stirnfläche 32 des Behälterstutzens 17, also die in der in **Fig. 3b** dargestellten Stirnansicht X des Behälterstutzens 17 in die Zeichnungsebene projizierte Oberfläche des Behälterstutzens 17, ein Innenschichtsegment 33 aufweist, das bei der Herstellung der Stumpfschweißverbindung 52 zur Ausbildung der Schweißkontaktfläche 26 exponiert für einen unmittelbaren Kontakt zu der in **Fig. 3a** dargestellten Schweißkontaktfläche 27 des Anschlussstutzens 21 zur Verfügung steht. Sowohl die Barriereschicht 23 als auch die Ex-Schicht 25 können bei einer derartigen Anordnung des die Kontaktfläche 26 des Behälterstutzens 17 ausbildenden Innenschichtsegments 33 die Herstellung der Schweißverbindung 52 nicht beeinträchtigen.

Bei dem in den **Fig. 2** und **3** dargestellten Ausführungsbeispiel ist der Behälterstutzen 17 konusförmig ausgebildet, derart, dass die Schweißkontaktfläche 26 des Behälterstutzens 17 durch eine Mantelfläche 34 eines von dem Behälterstutzen 17 gebildeten Innenkonus 35 gebildet ist, der mit einem am Anschlussstutzen 21 der Behälterarmatur 18 ausgebildeten Außenkonus 36 verschweißt ist.

Bezug nehmend auf die **Fig. 4a** bis **5c** soll nachfolgend die Herstellung des im Blasformverfahren an der Behälterwand 13 ausgebildeten Behälterstutzens 17 erläutert werden, wobei die Ausbildung des Behälterstutzens 17 auf Basis einer zunächst in der Behälterwand 13 ausgebildeten Ausstülpung 37 erfolgt. Wie ein Vergleich der **Fig. 4a** und **5a** zeigt, erfolgt die Herstellung der Ausstülpung 37 in zwei Expansionsschritten, wobei, wie **Fig. 4a** zeigt, ein in einer Formwand 38 einer Blasform an einer Wandausnehmung 39 angeordnetes Formwerkzeug 40 zum Einsatz kommt, das im vorliegenden Fall einen zylindrischen Innenschieber 41 und einem koaxial zum zylindrischen Innenschieber 41 angeordneten Außenschieber 42 aufweist, wobei sowohl der Innenschieber 41 als auch der Außenschieber 42 mit ihren Schieberböden 43 bzw. 44 bis auf einen radialen Randbereich 45 einen Formboden 46 der Wandausnehmung 39 ausbilden.

Wie die **Fig. 4a** und **5a** zeigen, ist die Wandausnehmung 39 derart ausgebildet, dass sie sich in Richtung auf den Formboden 46 in die Formwand 38 hinein erweitert und somit in der Formwand 38 eine ringförmige Hinterschneidung 47 ausbildet, derart, dass die Wandausnehmung 39 insgesamt konusförmig ausgebildet ist.

Wie **Fig. 4a** zeigt, nehmen der Innenschieber 41 und der Außenschieber 42 bei Ausführung des ersten Expansionsschrittes eine Relativanordnung ein, bei der sich der Innenschieber 41 mit seinem Schieberboden 43 in der Ebene des Formbodens 46 befindet und der Außenschieber 42 mit seinem Schieberboden 44 im Wesentlichen in der Ebene einer Formwandoberfläche 48 angeordnet ist, derart, dass die Hinterschneidung 47 durch den Außenschieber 42 abgedeckt wird und innerhalb der Wandausnehmung 39 ein zylindrischer Formraum 49 ausgebildet ist.

Wie aus einer Zusammenschau der **Fig. 4a** und **4b** hervorgeht, wird bei einer Expansion der Behälterwand 13 in die Wandausnehmung 39 zunächst ein Zentralbereich 50 der Ausstülpung 37 ausgebildet, also ein Vorformling der Ausstülpung 37, die dann anschließend erst in dem in **Fig. 5a** dargestellten zweiten Expansionsschritt fertiggestellt wird, wobei zur Ausführung des zweiten Expansionsschritts der Außenschieber 42, mit seinem Schieberboden 44 in eine flächenbündige Anordnung mit dem Schieberboden 43 des Innenschiebers bewegt wird, so dass nunmehr beide Schieberböden 43, 44 in der Ebene des Formbodens 46 angeordnet sind und ein durch die Hinterschneidung 47 ergänzter Formraum 51 ausgebildet ist.

In dem zweiten Expansionsschritt erfolgt die Expansion eines den Zentralbereich 47 umgebenden kreisringförmigen Wandbereichs 53 des Armaturenanschlussbereich 16 der Behälterwandung 13, der sich im ersten Expansionsschritt noch an dem Außenschieber 42 abstützt, wobei der Wandbereich 53 eine Fläche aufweist, die der Summe der Flächen des Schieberbodens 44 des Außenschiebers und einer durch einen Schieber-überstand s des Außenschiebers 42 gegenüber dem Innenschieber 41 gebildeten Schieberinnenwandfläche 54 entspricht. Da diese Fläche lediglich geringfügig kleiner ist als die Teiloberfläche der Wandausnehmung 39, die aus der Summe des Schieberbodens 44 des Außenschiebers 42 und der Oberfläche der Hinterschneidung 47 gebildet ist, führt die Expansion in dem in **Fig. 5a** dargestellten zweiten Expansionsschritt im Wesentlichen zu einem Umschlagen des an dem Außenschieber 42 abgestützten Randbereichs 53 in den radialen Randbereich 45 des Formbodens 46 und die angrenzende Hinterschneidung 47, so dass der Wandbereich 52 lediglich eine begrenzte Dehnung erfährt und der am stärksten gedehnte Anteil der Ausstülpung 37 im Bereich einer am Formboden 46 anliegenden Deckelwand 55 der Ausstülpung 37 ausgebildet ist.

Wie in **Fig. 5c** durch die Trennlinie angedeutet, bildet die Deckelwand 55 den Teil der Ausstülpung 37 aus, der zur Ausbildung der Behälteröffnung 31 am Behälterstutzen 17 durch einen Trennschnitt entfernt wird, so dass der fertig ausgebildete Behälterstutzen 17 im Vergleich zum umgebenden Armaturenanschlussbereich 16 der Behälterwand 13 keine die Funktion des Behälterstutzens 17 gefährdende Reduzierung der Wandstärke aufweist.

## Patentansprüche

1. Kunststoffbehälter (10) für Flüssigkeiten, insbesondere Innenbehälter für Transport- und Lagerbehälter für Flüssigkeiten mit einem Außenmantel aus einem Gitterwerk oder Blechmaterial und einem palettenartigen Untergestell, wobei der Kunststoffbehälter (10) als Blasformkörper durch Blasformen aus einem schlauchförmigen Vorformling in einer Blasform ausgebildet ist und in einem Armaturenanschlussbereich (16) einer Behälterwand (13) einen mit einer Behälteröffnung (31) versehenen Behälterstutzen (17) zum Anschluss einer Behälterarmatur (18) aufweist, der über eine Schweißverbindung (52) mit einem Anschlussflansch (21) der Behälterarmatur (18) verbunden ist, wobei
die Behälterwand (13) eine aus einem ersten Kunststoffmaterial gebildete Innenschicht (22) und eine aus einem zweiten Kunststoffmaterial gebildete Außenschicht (24) aufweist,
**dadurch gekennzeichnet,**
**dass** der Behälterstutzen (17) einen sich zur Behälteröffnung (31) hin erweiternden Längsquerschnitt aufweist, derart, dass eine Stirnfläche (32) des Behälterstutzens (17) zumindest teilweise durch ein gegenüberliegend der Außenschicht (24) angeordnetes Innenschichtsegment (33) gebildet ist, und eine Schweißkontaktfläche (26) des Behälterstutzens (17) von dem Innenschichtsegment (33) ausgebildet wird, wobei der Behälterstutzen (17) konusförmig ausgebildet ist, derart, dass die Schweißkontaktfläche (26) durch eine Mantelfläche (34) eines mit der Innenschicht (22) versehenen Innenkonus (35) gebildet ist, der mit einen am Anschlussstutzen (21) der Behälterarmatur (18) ausgebildeten Außenkonus (36) verschweißt ist, wobei die Behälterarmatur (18) als Entnahmearmatur ausgebildet ist.

2. Verfahren zur Herstellung eines Kunststoffbehälters (10) für Flüssigkeiten, insbesondere als Innenbehälter für Transport- und Lagerbehälter für Flüssigkeiten mit einem Außenmantel aus einem Gitterwerk oder Blechmaterial und einem palettenartigen Untergestell, wobei der Kunststoffbehälter (10) als Blasformkörper durch Blasformen aus einem schlauchförmigen Vorformling in einer Blasform hergestellt wird und einen in einem Armaturenanschlussbereich (16) einer Behälterwand (13) ausgebildeten und mit einer Behälteröffnung (31) versehenen Behälterstutzen (17) zum Anschluss einer Behälterarmatur (18) aufweist, wobei zur Ausbildung des Behälterstutzens (17) in einer Wandausnehmung (39) der Blasform eine durch eine Deckelwand (55) verschlossene Ausstülpung (37) der Behälterwand (13) ausgebildet wird, anschließend durch Abtrennen des Deckelbodens (55) die Behälteröffnung (31) ausgebildet wird, und nachfolgend die Verbindung des Behälterstutzens (17) mit einem Anschlussstutzen (21) der Behälterarmatur (18) als eine Schweißverbindung (52) ausgebildet wird, wobei
die Behälterwand (13) eine aus einem ersten Kunststoffmaterial gebildete Innenschicht (22) und eine aus einem zweiten Kunststoffmaterial gebildete Außenschicht (24) aufweist,
**dadurch gekennzeichnet,**
**dass** beim Blasformen des Kunststoffbehälters (10) zur Ausbildung der Ausstülpung (37) eine Expansion der Behälterwand (13) in eine sich erweiternde Wandausnehmung (39) der Blasform erfolgt, derart, dass die in der Behälterwand (13) ausgebildete Ausstülpung (37) zur Deckelwand (55) hin einen größer werdenden Querschnitt aufweist und nach dem Abtrennen der Deckelwand (55) zur Ausbildung der Behälteröffnung (31) eine sich zur Behälteröffnung (31) hin erstreckende durch ein Innenschichtsegment (33) gebildete Schweißkontaktfläche (26) ausgebildet wird, wobei die Expansion in eine sich konusförmig erweiternde Wandausnehmung (39) erfolgt, wobei die Behälterarmatur (18) als Entnahmearmatur ausgebildet ist.

3. Verfahren nach Anspruch 2,
**dadurch gekennzeichnet,**
**dass** die Ausbildung der Ausstülpung (37) in zumindest zwei Expansionsschritten erfolgt, derart, dass in einem ersten Expansionsschritt eine Ausbildung eines Zentralbereichs (50) der Ausstülpung (37) erfolgt und nachfolgend in einem zweiten Expansionsschritt die Ausbildung eines zum Zentralbereich konzentrisch angeordneten konusförmigen Wandbereichs (53) der Ausstülpung erfolgt.

4. Verfahren nach Anspruch 3,
**dadurch gekennzeichnet,**
**dass** der Zentralbereich (50) der Ausstülpung (37) zylindrisch ausgebildet ist.

5. Verfahren nach Anspruch 3 oder 4,
**dadurch gekennzeichnet,**
**dass** die Ausbildung des Zentralbereichs (50) der Ausstülpung (37) gleichzeitig mit der Ausbildung der Blasformkörpers erfolgt.

## Claims

1. A plastic container (10) for liquids, in particular an inner container for transport and storage containers for liquids comprising an outer jacket made of latticework or of sheet metal material and a pallet-type understructure, the plastic container (10) being realized as a blow-molded body by blow molding from a tubular preform in a blow mold and having a container socket (17) for connecting a container fitting (18) in a fitting connecting area (16) of a container wall (13), the container socket (17) being provided with a container opening (31) and being connected to a connecting flange (21) of the container fitting (18) via a welded joint (52),
the container wall (13) having an inner layer (22) made of a first plastic material and an outer layer (24) made of a second plastic materi al,
**characterized in that**
the container socket (17) has a longitudinal cross section widening toward the container opening (31) in such a manner that an end face (32) of the container socket (17) is formed at least in part by an inner layer segment (33) disposed opposite the outer layer (24), and a welding contact surface (26) of the container socket (17) is formed by the inner layer segment (33)
the container socket (17) being cone-shaped in such a manner that the welding contact surface (26) is formed by a wall surface (34) of an inner cone (35), the inner cone (35) being provided with the inner layer (22) and being welded to an outer cone (36) formed on a connecting piece (21) of the container fitting (18), the container fitting (18) being realized as a tap fitting.

2. A method for producing a plastic container (10) for liquids, in particular as an inner container for transport and storage containers for liquids comprising an outer jacket made of latticework or of sheet metal material and a pallet-type understructure, the plastic container (10) being realized as a blow-molded body by blow molding from a tubular preform in a blow mold and having a container socket (17) for connecting a container fitting (18), the container socket (17) being realized in a fitting connecting area (16) of a container wall (13) and being provided with a container opening (31), wherein, in order to produce the container socket (17), a bulge (37) of the container wall (13) closed by a covering wall (55) is realized in a wall recess (39) of the blow mold, then the container opening (31) is formed by cutting off the covering wall (55), and then the connection between the container socket (17) and a connecting piece (21) of the container fitting (18) is established in the form of a welded joint (52),
the container wall (13) having an inner layer (22) made of a first plastic material and an outer layer (24) made of a second plastic materi al,
**characterized in that**
in order to form the bulge (37), the container wall (13) is expanded into a widening wall recess (39) of the blow mold during blow molding of the plastic container (10) in such a manner that the bulge (37) formed in the container wall (13) has a cross section increasing toward the covering wall (55) and, once the covering wall (55) has been cut off in order to form the container opening (31), a welding contact surface (26) formed by an inner layer segment (33) and extending toward the container opening (31) is formed, the expansion occurring in a conically expanded wall recess (39), the container fitting (18) being realized as a tap fitting.

3. The method according to claim 2,
**characterized in that**
the bulge (37) is formed in at least two expansion steps in such a manner that a central portion (50) of the bulge (37) is formed in a first expansion step and a conical wall portion (53) of the bulge disposed concentrically with the central portion is formed subsequently in a second expansion step.

4. The method according to claim 3,
**characterized in that**
the central portion (50) of the bulge (37) is cylindrical.

5. The method according to claim 3 or 4,
**characterized in that**
the central portion (50) of the bulge (37) and the blow-molded body are formed simultaneously.

## Revendications

1. Récipient en plastique (10) pour liquides, notamment un récipient intérieur pour récipients de transport et de stockage pour liquides comprenant une enveloppe extérieure en treillis ou en matériau de tôle et une sous-construction de type palette, le récipient en plastique (10) étant réalisé comme corps moulé par soufflage à partir d'une préforme tubulaire dans un moulage de soufflage et ayant un manchon de récipient (17) pour connecter un raccord de récipient (18) dans une zone de connexion de raccord (16) d'une paroi de récipient (13), le manchon de récipient (17) étant pourvu d'une ouverture de récipient (31) et étant relié à une bride de raccordement (21) du raccord de récipient (18) par une connexion par soudage (52),
la paroi de récipient (13) ayant une couche intérieure (22) faite d'une première matière plastique et une couche extérieure (24) faite d'une deuxième matière plastique,
**caractérisé en ce que**
le manchon de récipient (17) a une section transversale longitudinale s'élargissant vers l'ouverture de récipient (31) de telle manière qu'une face d'extrémité (32) du manchon de récipient (17) est formée au moins en partie par un segment de couche intérieure (33) disposé à l'opposé de la couche extérieure (24), et **en ce qu'**une surface de contact de soudage (26) du manchon de récipient (17) est formée par le segment de couche intérieure (33)
le manchon de récipient (17) est conique de telle manière que la surface de contact de soudage (26) est formée par une surface d'enveloppe (34) d'un cône intérieur (35), le cône intérieur (35) étant pourvu de la couche intérieure (22) et étant soudé à un cône extérieur (36) formé sur un manchon de connexion (21) du raccord de récipient (18), le raccord de récipient (18) étant réalisé en tant que raccord de robinetterie.

2. Procédé de fabrication d'un récipient en plastique (10) pour liquides, notamment comme récipient intérieur pour récipients de transport et de stockage pour liquides comprenant une enveloppe extérieure en treillis ou en matériau de tôle et une sous-construction de type palette, le récipient en plastique (10) étant réalisé comme corps moulé par soufflage à partir d'une préforme tubulaire dans un moulage de soufflage et comportant un manchon de récipient (17) pour connecter un raccord de récipient (18), le manchon de récipient (17) étant réalisée dans une zone de connexion de raccord (16) d'une paroi de récipient (13) et étant pourvue d'une ouverture de récipient (31), dans lequel, afin de produire le manchon de récipient (17), une bosse (37) de la paroi de récipient (13) fermée par une paroi de recouvrement (55) est réalisée dans une cavité de paroi (39) du moulage de soufflage, puis l'ouverture de récipient (31) est formée en coupant la paroi de recouvrement (55), et ensuite la connexion entre le manchon de récipient (17) et un manchon de connexion (21) du raccord de récipient (18) est établie sous la forme d'une connexion par soudage (52),
la paroi de récipient (13) a une couche intérieure (22) faite d'une première matière plastique et une couche extérieure (24) faite d'une deuxième matière plastique,
**caractérisé en ce que**
pour former la bosse (37), la paroi de récipient (13) est expansée dans une cavité de paroi (39) s'élargissant du moulage de soufflage pendant le moulage de soufflage du récipient en plastique (10) de telle manière que la bosse (37) formée dans la paroi de récipient (13) a une section transversale augmentant vers la paroi de recouvrement (55) et, une fois que la paroi de recouvrement (55) a été coupée pour former l'ouverture du récipient (31), une surface de contact de soudage (26) formée par un segment de couche intérieure (33) et s'étendant vers l'ouverture du récipient (31) est formée, l'expansion se produisant dans une cavité de paroi (39) à expansion conique, le raccord de récipient (18) étant réalisé en tant que raccord de robinetterie.

3. Procédé selon la revendication 2,
**caractérisé en ce que**
la bosse (37) est formée en au moins deux étapes d'expansion de telle manière qu'une portion centrale (50) de la bosse (37) est formée dans une première étape d'expansion et qu'une portion de paroi conique (53) de la bosse disposée concentriquement avec la portion centrale est formée ultérieurement dans une deuxième étape d'expansion.

4. Procédé selon la revendication 3,
**caractérisé en ce que**
la portion centrale (50) de la bosse (37) est cylindrique.

5. Procédé selon la revendication 3 ou la revendication 4,
**caractérisé en ce que**
la portion centrale (50) de la bosse (37) et le corps moulé par soufflage sont formés simultanément.
